# EUROPÄISCHE PATENTSCHRIFT

(11) **EP 3 488 916 B1**
(45) Veröffentlichungstag und Bekanntmachung des Hinweises auf die Patenterteilung: **12.08.2020**
(21) Anmeldenummer: 18202332.5
(22) Anmeldetag: 24.10.2018
(51) Int. Cl.: B01F 3/02, B01F 5/00, F02K 1/38, F02K 9/82

(54) **FLUIDMISCHER MIT VERSETZT ANGEORDNETEM FLUIDKANALAUSLASS, BRENNKAMMER UND LUFTFAHRZEUG MIT EINEM FLUIDMISCHER**
FLUID MIXER WITH OFFSET FLUID CHANNEL OUTLET, COMBUSTION CHAMBER AND AIRCRAFT EQUIPPED WITH A FLUID MIXER
MÉLANGEUR DE FLUIDE POURVU DE SORTIE DE CANAL DE FLUIDE MONTÉE DÉCALÉE, CHAMBRE DE COMBUSTION ET AÉRONEF DOTÉ D'UN MÉLANGEUR DE FLUIDE

(30) Priorität: 24.11.2017 DE 102017127830
(43) Veröffentlichungstag der Anmeldung: 29.05.2019
(73) Patentinhaber: ArianeGroup GmbH, 82024 Taufkirchen (DE)
(72) Erfinder: Dr.-Ing. Höglauer, Christoph, 83329 Waging am See (DE)
(74) Vertreter: Schornack, Oliver

(56) Entgegenhaltungen:
- WO-A1-2014/200088

## Beschreibung

Die vorliegende Erfindung betrifft einen Fluidmischer mit versetzt angeordnetem Fluidkanalauslass, eine Brennkammer und ein Luftfahrzeug jeweils mit solch einem Fluidmischer. Insbesondere betrifft die vorliegende Erfindung einen Fluidmischer mit mehreren Fluidkanälen, die in eine Mischkammer münden, wobei mindestens ein Fluidkanal einen Kanalauslass aufweist, der sich in Strömungsrichtung des Fluides weiter erstreckt als ein Kanalauslass eines der übrigen Fluidkanäle. Entsprechend betrifft die vorliegende Erfindung auch eine Brennkammer und ein Luftfahrzeug mit solch einem Fluidmischer.

Derzeitige Fluidmischer, insbesondere für den Einsatz in einer Brennkammer eines Triebwerks, weisen nebeneinander angeordnete Fluidkanäle auf. Dabei verlaufen die Fluidkanäle entlang einer Brennkammer, wodurch auf einer Seite der Fluidkanäle Wärme von dem durch die Fluidkanäle strömenden Fluid aufgenommen wird. Das Fluid kann beispielsweise ein Treibstoff oder eine Treibstoffkomponente sein, der/die vor der Zuführung in die Brennkammer erwärmt wird. Um die dabei entstehende thermische Stratifizierung (in dem Fluid vorherrschende Schichten unterschiedlicher Temperatur) zu reduzieren, wird das Fluid aus den Fluidkanälen in eine Mischkammer geleitet.

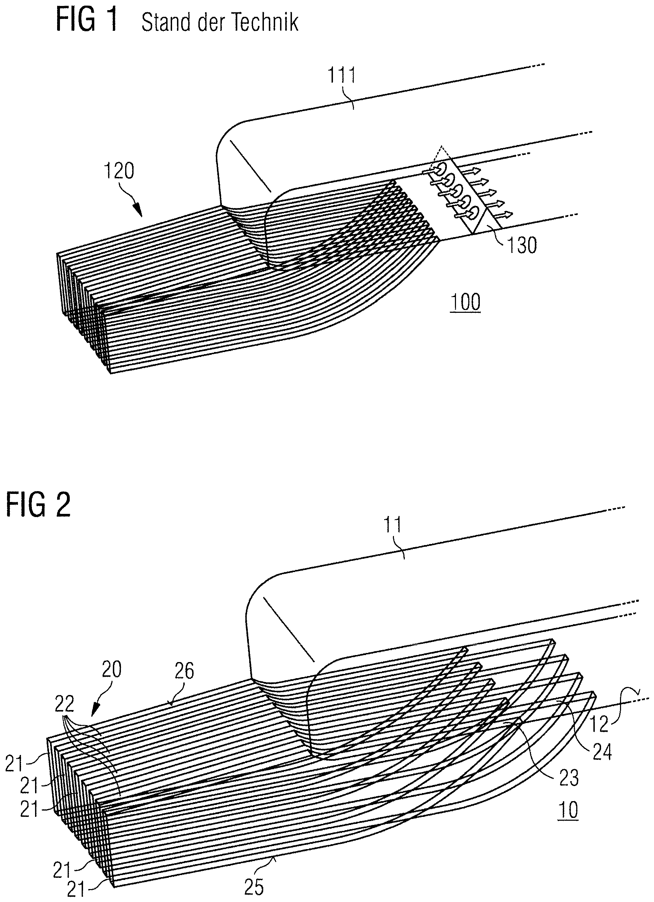

Eine entsprechende Anordnung solcher Fluidkanäle und Mischkammer ist in Figur 1 dargestellt. Dabei werden Fluidkanäle 120 so an eine Mischkammer 111 angeschlossen, dass eine teilweise Umlenkung der Schichten und somit eine Verwirbelung des Fluids stattfindet. Zudem ist in der Mischkammer 111 ein Mischer 130 vorgesehen, der den Querschnitt der Mischkammer 111 zumindest teilweise einnimmt. Hierbei kann es sich beispielsweise um zwei schräg zu einander angeordnete Bleche handeln, wobei ein erstes Blech Öffnungen aufweist, die in Strömungsrichtung des Fluids durch die Mischkammer 111 versetzt zu Öffnungen in einem zweiten, stromabwärts angeordneten Blech angeordnet sind. Dadurch muss das durch die Öffnungen des ersten Bleches strömende Fluid umgelenkt werden, um durch die versetzten Öffnungen in dem zweiten Blech strömen zu können. Jedoch geht dies mit einem Druckverlust und Fluidreibungsverlusten einher.

WO 2014/200088 A1 betrifft einen Miniaturmischer für die Mischung von Fluiden zur biochemischen Analyse. Der Miniaturmischer lässt sich auf einem Mikrochip anordnen. In einem Substrat werden, für eine erste Ausführungsform, parallel zu einander angeordnete Einschnitte vorgesehen. Dabei ist eine erste Gruppe der Einschnitte auf einer Seite des Substrats mit einem Einlass fluidisch verbunden und eine zweite Gruppe der Einschnitte auf einer gegenüberliegenden Seite des Substrats mit einem weiteren Einlass fluidisch verbunden, wobei jeweils ein Einschnitt aus der ersten Gruppe benachbart zu mindestens einem Einschnitt der zweiten Gruppe angeordnet ist. In dem Substrat sind ferner eine Vielzahl von Öffnungen in jeden der Einschnitte vorgesehen, durch die das jeweilige Fluid in eine über dem Substrat angeordnete Mischkammer aus dem jeweiligen Einschnitt ausströmen kann. In einer weiteren Ausführungsform kann jeder Einschnitt in zwei oder mehr voneinander getrennte Bereiche unterteilt sein, wobei ausgehend von der Seite des Substrats, auf der das Fluid in den Einschnitt strömt, die Bereiche zunächst horizontal übereinander verlaufen. Mit zunehmender Entfernung von dieser Seite des Substrats endet der der Mischkammer am nächsten gelegene Bereich, wobei der darunterliegende Bereich sich zu der Mischkammer hin erstreckt und somit den ersten Bereich umgibt. Dadurch kann aus den Öffnungen, die alle oberhalb der Bereiche eines Einschnitt auf einer Achse angeordnet sind, Fluid aus jedem der Bereiche in die Mischkammer einströmen.

Die vorliegende Erfindung ist auf die Aufgabe gerichtet, einen Fluidmischer, eine Brennkammer sowie ein Luftfahrzeug mit einem entsprechenden Fluidmischer zustellen, der eine Reduzierung der thermischen Stratifizierung bei gleichzeitiger verbesserter Vermischung des Fluids erzielt.

Diese Aufgabe wird durch einen Fluidmischer mit den Merkmalen des Anspruchs 1, einer Brennkammer mit den Merkmalen des Anspruchs 10 und einem Luftfahrzeug mit den Merkmalen des Anspruchs 11 gelöst.

Gemäß einem ersten Aspekt hat ein Fluidmischer eine Vielzahl von Fluidkanälen, die jeweils einen Kanalboden und eine Kanaldecke aufweisen, wobei jeder Fluidkanal einen Kanalauslass an seiner Kanaldecke aufweist. Ferner umfasst der Fluidmischer eine Mischkammer, die einen Kammerboden aufweist, in dem jeder Kanalauslass der Vielzahl von Fluidkanälen angeordnet ist.

Da der Kanalauslass eines Fluidkanals an dessen Kanaldecke jedoch an dem Kammerboden angeordnet ist, wird ein durch den Fluidkanal strömendes Fluid abgelenkt, wenn es in die Mischkammer strömt. Dieser Versatz findet in Strömungsrichtung des Fluids innerhalb des Fluidkanals vor und bei dem Kanalauslass sowie in der parallel dazu angeordneten Mischkammer statt. Die Strömungsrichtung des Fluids innerhalb des Fluidkanals vor dem Kanalauslass entspricht einer Längsrichtung des Fluidkanals. In Längsrichtung der Fluidkanälen betrachtet sind alle Fluidkanäle nebeneinander angeordnet, sodass auch deren Kanalauslässe nebeneinander (direkt nebeneinander liegend oder beabstandet voneinander) in die Mischkammer münden.

Ferner weist mindestens ein Fluidkanal der Vielzahl von Fluidkanälen einen Kanalauslass auf, der sich in Strömungsrichtung des in dem Fluidkanal strömenden Fluids weiter erstreckt als ein Kanalauslass eines der übrigen Fluidkanäle. Mit anderen Worten liegt in Längsrichtung des Fluidkanals betrachtet ein Ende des Kanalauslasses des mindestens einen Fluidkanals beabstandet von einem Ende eines Kanalauslasses der übrigen Fluidkanäle. Dabei bedeutet sich weiter erstrecken nur den Versatz des Endes des mindestens einen Kanalauslasses. Der Anfang der Kanalauslässe der Fluidkanäle kann ebenfalls beabstandet voneinander liegen. Mit anderen Worten ist die Längserstreckung (in Längsrichtung der Fluidkanälen betrachtet) jedes Kanalauslasses aller Fluidkanäle gleich groß, nur Anfang und Ende einzelner Fluidkanäle liegen versetzt. Alternativ kann der Anfang aller Kanalauslässe in Längsrichtung der Fluidkanäle auf gleicher Höhe liegen. Beispielsweise kann der Anfang aller Kanalauslässe mit einem Anfang der Mischkammer zusammenfallen. Hierbei wäre der Kanalauslass des mindestens einen Fluidkanals in Längsrichtung der Fluidkanäle betrachtet länger als die Kanalauslässe der übrigen Fluidkanäle.

Aufgrund des unterschiedlich angeordneten Endes des Kanalauslasses des mindestens einen Fluidkanals strömt Fluid von diesem Fluidkanal neben Fluid von seinem/n benachbarten Fluidkanal/kanälen in die Mischkammer. Dabei wird eine Scherströmung zu den benachbarten Fluidströme erzeugt. In der Mischkammer erzeugt diese Scherströmung Längswirbel, wodurch das Fluid zwischen Kammerboden und Kanaldecke der Mischkammer verwirbelt wird. Dies bewirkt eine deutliche Reduzierung der thermischen Stratifizierung. Der Fluidmischer kann dabei aber ohne Mischer (Verwirbelungsvorrichtung innerhalb der Mischkammer) gestaltet werden. Dies bedeutet nicht nur eine kostengünstigere Herstellung des Fluidmischers aufgrund einer geringeren Anzahl an Komponenten und kürzerer Herstellungszeit, sondern auch einer Reduzierung der Reibungsverluste und eine Reduzierung des Druckverlustes des Fluids innerhalb der Mischkammer.

In einer Ausgestaltungsvariante kann der mindestens eine Fluidkanal mehrere Fluidkanälen umfassen. Es gibt also mehr als einen Fluidkanal mit in Längsrichtung des Fluidkanals versetzt angeordnetem Kanalauslassende. Dabei kann sich mindestens ein Fluidkanal der übrigen Fluidkanäle zwischen zwei der mehreren Fluidkanäle befinden. Eine dazwischenliegende Anordnung bedeutet hierbei quer zur Längsrichtung der Fluidkanäle und parallel zu dem Kammerboden.

In einer weiteren Ausgestaltungsvariante kann jeder Fluidkanal einen rechteckigen Querschnitt aufweisen. Beispielsweise kann jeder Fluidkanal einen rechteckigen Querschnitt haben oder alternativ einen quadratischen Querschnitt. Ein rechteckiger Querschnitt kann ein großes Seitenverhältnis aufweisen. Beispielsweise kann ein Fluidkanal einen Querschnitt mit zwei gegenüberliegenden kurzen Seiten aufweisen, die einen Kanalboden bzw. eine Kanaldecke bilden. Die dazwischenliegenden Seitenwände sind im Verhältnis dazu deutlich länger, beispielsweise um den Faktor 2 bis 20 länger als die kurzen Seiten des Fluidkanalquerschnitts. Alternativ kann mindestens ein Fluidkanal einen trapezförmigen Querschnitt aufweisen. Beispielsweise kann eine kurze der parallelen Trapezseiten die Kanaldecke des Fluidkanals bilden, während eine längere der parallelen Trapezseiten den Kanalboden bildet. Ebenfalls alternativ kann mindestens ein Fluidkanal einen runden, beispielsweise kreisförmigen, Querschnitt aufweisen.

In einer anderen Ausgestaltungsvariante kann auch die Mischkammer einen rechteckigen oder trapezförmigen Querschnitt aufweisen. Beispielsweise kann die Mischkammer einen trapezförmigen Querschnitt haben, der eine Verlängerung der (äußeren) Seitenwände der (äußeren) Fluidkanäle darstellt. Alternativ dazu kann die Querschnittsfläche der Mischkammer auch ein Kreisringsegment darstellen. Dabei können die Fluidkanäle auf einer äußeren Seite des Kreisringsegments angeordnet sein und dort in die Mischkammer münden. Dies kann eine Verdichtung des Fluids aufgrund des kleineren Querschnitts der Mischkammer im Verhältnis zur Gesamtquerschnittsfläche aller Fluidkanäle bewirken. Die Fluidkanäle können jedoch auch beabstandet voneinander angeordnet sein, sodass die Querschnittsfläche der Mischkammer gleich groß oder größer ist als die Gesamtquerschnittsfläche aller Fluidkanäle. Selbstverständlich können die Fluidkanäle auch auf der inneren Seite der Mischkammer angeordnet sein und dort in die Mischkammer münden.

In noch einer weiteren Ausgestaltungsvariante ist die Mischkammer ein Kreisringzylinder, wobei die Vielzahl von Fluidkanälen an einer Außenseite oder Innenseite des Kreisringzylinders angeordnet ist.

Eine weitere Ausgestaltung sieht vor, dass der mindestens eine Fluidkanal zumindest in einem Abschnitt des Kanalauslasses einen gekrümmten Kanalboden aufweist (bei Betrachtung des Fluidkanals von der Seite, also in einem Querschnitt des Fluidkanals parallel zur Längsrichtung). Dabei kann die Krümmung des Kanalbodens einen festen Radius bilden. Alternativ kann die Krümmung des Kanalbodens auch im Verlauf des Kanalbodens in Strömungsrichtung des Fluids zunehmen. Beispielsweise kann die Krümmung des Kanalbodens einen Ausschnitt einer Ellipse oder einer stetigen Kurve darstellen. Dabei ist die Krümmung des Kanalbodens so vorgesehen, dass sich der Kanalboden dem Kammerboden annähert. Alternativ kann der Kanalboden auch mindestens eine Kante aufweisen, auf deren Seiten der Kanalboden geradlinig verläuft, wobei der Kanalboden an dem Kammerboden endet.

Ferner kann der (gekrümmte) Kanalboden an dem Kanalauslass mit dem Kammerboden einen stumpfen Winkel bilden. Dieser stumpfe Winkel ergibt sich bei seitlicher Betrachtung des Fluidmischers, also in einem Querschnitt des Fluidmischers parallel zur Längsrichtung der Fluidkanäle. Der stumpfe Winkel sorgt dafür, dass das in die Mischkammer einströmende Fluid nicht senkrecht auf eine Kammerdecke strömt, sondern eine Strömungskomponente in Längsrichtung der Fluidkanäle (entsprechend der Längsrichtung der Mischkammer) aufweist. Dadurch werden ungünstige Strömungen an der Kammerdecke entgegen der Strömungsrichtung des Fluids in den Fluidkanälen (d.h. eine ungünstige Strömung in der Mischkammer weg von einem Mischkammerauslass) vermieden.

Alternativ oder zusätzlich können die übrigen Fluidkanäle zumindest in einem Abschnitt des Kanalauslasses einen gekrümmten Kanalboden aufweisen. Auch hier kann die Krümmung des Kanalbodens einen festen Radius bilden oder im Verlauf des Kanalbodens in Strömungsrichtung des Fluids zunehmen. Die für den Kanalboden des mindestens einen Fluidkanals beschriebenen Ausgestaltungen können auch für den Kanalboden der übrigen Fluidkanäle herangezogen werden. Dies schließt insbesondere einen stumpfen Winkel zwischen dem Kanalboden der übrigen Fluidkanäle und dem Kammerboden ein.

Alternativ oder zusätzlich kann sich eine Krümmung des gekrümmten Kanalbodens des mindestens einen Fluidkanals von einer Krümmung des gekrümmten Kanalbodens der übrigen Fluidkanäle unterscheiden. Beispielsweise kann die Krümmung des Kanalbodens des mindestens einen Fluidkanals kleiner sein als die Krümmung des Kanalbodens der übrigen Fluidkanäle. Ebenso kann der Kanalboden des mindestens einen Fluidkanals entlang eines Radius verlaufen, der kleiner ist als der des Kanalbodens der übrigen Fluidkanäle.

Ebenso kann der Winkel des Kanalbodens der übrigen Fluidkanäle mit dem Kanalboden größer sein als der Winkel des Kanalbodens des mindestens einen Fluidkanals mit dem Kammerboden. Da das Fluid versetzt und unter unterschiedlichen Winkeln aus dem Fluidkanal in die Mischkammer tritt, kann sich die Strömung der "kürzeren" übrigen Fluidkanäle aufgrund des flacheren Austrittswinkels und daran anschließende Lauflänge innerhalb der Mischkammer axial in Längsrichtung der Mischkammer ausrichten. Das nun aus dem/n in Strömungsrichtung des Fluids in der Mischkammer stromabwärts gelegene/n Kanalauslass/auslässen des mindestens einen Fluidkanals austretende Fluid bewirkt eine Scherströmung aufgrund des an dem Kanalauslassende des mindestens einen Fluidkanals vorherrschenden Winkelunterschieds zwischen den beiden Fluidströmen in der Mischkammer. Dieser Winkelunterschied der Scherströmung und der bereits axial ausgerichteten Längsströmung beeinflusst die Erzeugung von Längswirbeln.

Dabei kann der Beginn der Krümmung des Kanalbodens des mindestens einen Fluidkanals in Strömungsrichtung des Fluids stromabwärts gesehen versetzt zu dem Beginn der Krümmung des Kanalbodens der übrigen Fluidkanäle angeordnet sein. Alternativ dazu können die Krümmungen der Kanalböden aller Fluidkanäle in Strömungsrichtung des Fluids (Längsrichtung der Fluidkanälen) an gleicher Stelle beginnen, wobei die Krümmung (oder der Radius) des Kanalboden des mindestens einen Fluidkanals größer ist als die Krümmung (oder der Radius) des Kanalbodens der übrigen Fluidkanäle.

In einer weiteren Ausgestaltungsvariante kann der Kammerboden im Wesentlichen parallel zu der Kanaldecke der Vielzahl von Fluidkanälen verlaufen. Mit anderen Worten kann der Kammerboden eine Ebene bilden, die parallel zu einer Ebene der Kanaldecke der Vielzahl von Fluidkanälen angeordnet ist. Dabei können die beiden Ebenen zusammenfallen oder versetzt zu einander liegen (beispielsweise können die Kanaldecken eine Anfangswand der Mischkammer schneiden).

Alternativ oder zusätzlich können die Kanaldecken der Fluidkanäle in unterschiedlichen Ebenen angeordnet sein.

In einer anderen Ausgestaltungsvariante kann die Kanaldecke der Vielzahl von Fluidkanälen oder eines oder mehrerer Fluidkanäle zumindest in einem den Kanalauslass angrenzenden Bereich der Kanaldecke einen Winkel mit dem Kammerboden bilden. Beispielsweise kann die Kanaldecke eines oder mehrerer Fluidkanäle zur Kammerdecke hin ausgerichtet sein, sodass das durch den Fluidkanal strömende Fluid an der Kanaldecke bereits in Richtung Kammerdecke strömen kann. Gemäß einem weiteren Beispiel können die Kanaldecke aller übrigen Fluidkanäle einen Winkel mit dem Kammerboden bilden, während die Kanaldecke/n des mindestens einen Fluidkanals parallel zu dem Kammerboden verläuft.

Alternativ oder zusätzlich kann die Kanaldecke irgendeines Fluidkanals oder aller Fluidkanäle in einem Abschnitt des Fluidkanals stromaufwärts des Kanalauslasses eine Krümmung aufweisen. Der Kanalboden des Fluidkanals kann in diesem Abschnitt eine parallele Krümmung zu der zugehörigen Kanaldecke aufweisen. Alternativ kann der Kanalboden geradlinig weiter verlaufen, sodass eine Aufweitung des Querschnitts des Fluidkanals vor der Mischkammer stattfindet.

In einer Ausgestaltungsvariante des Fluidmischers kann die Mischkammer einen Bereich stromabwärts des aus dem Fluidkanal in die Mischkammer strömenden Fluids aufweisen, der einen gleichbleibenden Querschnitt aufweist. In diesem Bereich mit gleichbleibendem Querschnitt können die Längswirbel eine optimale Vermischung der Fluidströme und insbesondere eine gute Reduzierung der thermischen Stratifizierung erzielen. Je nach Fluid, welches vermischt werden soll, kann die Länge der Mischkammer mit gleichbleibendem Querschnitt angepasst werden.

In einer anderen Ausgestaltungsvariante kann eine Querschnittsachse eines Fluidkanals einen gemeinsamen Schnittpunkt mit einer Querschnittsachse eines benachbarten Fluidkanals aufweisen. Eine Querschnittsachse liegt innerhalb einer Querschnittsebene des Fluidkanals und steht senkrecht zur Längsachse (Längsrichtung) des Fluidkanals. Durch die Bildung eines Schnittpunkts der Querschnittsachsen benachbarter Fluidkanäle können die Kanaldecken der Fluidkanäle an eine Krümmung des Kammerboden der Mischkammer angepasst werden. Dabei können jeweils benachbarte Fluidkanäle Querschnittsachsen mit gemeinsamen Schnittpunkt aufweisen. Alternativ hierzu können auch benachbarte Fluidkanäle mit parallelen Querschnittsachsen in dem Fluidmischer vorhanden sein, während lediglich einzelne Fluidkanäle schräg angeordnet sind (also eine Querschnittsachse mit einem Schnittpunkt zur Querschnittsachse des einen oder beider benachbarten Fluidkanäle aufweisen).

Gemäß einer weiteren Ausgestaltungsvariante kann es sich bei dem Fluid in der Vielzahl von Fluidkanälen um das gleiche Fluid handeln (das gleiche Gas, Flüssigkeit, etc.). Alternativ kann in einem oder mehreren Fluidkanälen ein (jeweils) unterschiedliches Fluid strömen (also unterschiedliche Gase, Flüssigkeiten, etc.), welche/s in der Mischkammer des Fluidmischers mit einem oder mehreren Fluiden aus den übrigen Fluidkanälen vermischt wird/werden.

Gemäß einem zweiten Aspekt ist eine Brennkammer mit einem Fluidmischer gemäß dem ersten Aspekt ausgestattet. Selbstverständlich kann die Brennkammer einen Fluidmischer gemäß irgendeiner der beschriebenen Ausgestaltungsvarianten, Alternativen und zusätzlichen Formen aufweisen. Die Brennkammer kann Teil eines Triebwerks eines Luftfahrzeugs sein. Beispielsweise kann es sich um ein Raketentriebwerk einer Rakete, eine Steuerdüse eines Satelliten oder ein Düsentriebwerk eines Flugzeugs handeln.

Gemäß einem dritten Aspekt hat ein Luftfahrzeug einen Fluidmischer gemäß dem ersten Aspekt. Auch hier kann das Luftfahrzeug einen Fluidmischer gemäß irgendeiner der beschriebenen Ausgestaltungsvarianten, Alternativen und zusätzlichen Formen aufweisen. Bei einem Luftfahrzeug kann es sich um jegliches Fahrzeug aus der Luft- und Raumfahrt handeln, beispielsweise ein Flugzeug, eine Rakete, ein Satellit, etc.. Beispielsweise kann das Luftfahrzeug einen Fluidmischer zur Vermischung warmer und kalter Luft zur Zuführung in einen Bereich des Luftfahrzeugs, beispielsweise in eine Passagierkabine oder ein Cockpit, vorgesehen sein. Ebenso kann ein Luftfahrzeug auch eine Brennkammer für ein Triebwerk des Luftfahrzeugs gemäß dem zweiten Aspekt umfassen.

Gemäß noch einem weiteren Aspekt kann der Fluidmischer gemäß dem ersten Aspekt zur Vermischung unterschiedlicher Fluide oder unterschiedlich temperierter Stoffströme in einer Anlage der chemischen Industrie eingesetzt werden.

Die hier beschriebenen Ausgestaltungen, Varianten und Aspekte können beliebig kombiniert werden, sodass weitere nicht explizit beschriebene Ausgestaltungsvarianten gebildet werden.

Nachfolgend werden Ausführungsbeispiele der Erfindung anhand der Zeichnungen näher beschrieben. Dabei werden auch Vergleiche mit konventionellen Mischern dargestellt.
Figur 1 zeigt schematisch einen Fluidmischer gemäß dem Stand der Technik.
Figur 2 zeigt schematisch und teilweise transparent einen Fluidmischer gemäß vorliegender Offenbarung.
Figur 3 zeigt schematisch eine perspektivische Ansicht des Fluidmischers aus Figur 2.
Figur 4 zeigt schematisch einen Ausschnitt einer Querschnittsansicht des Fluidmischers aus Figur 2.
Figur 5 zeigt schematisch eine thermische Stratifizierung in einer Seitenansicht ohne Einsatz eines Fluidmischers gemäß vorliegender Offenbarung.
Figur 6 zeigt schematisch eine thermische Vermischung von Fluidströmen anhand einer Querschnittsansicht eines Fluidmischers gemäß vorliegender Offenbarung.
Figur 7 zeigt schematisch eine thermische Stratifizierung in einer Bodenansicht ohne Einsatz eines Fluidmischers gemäß vorliegender Offenbarung.
Figur 8 zeigt schematisch eine thermische Vermischung von Fluidströmen anhand einer Bodenansicht eines Fluidmischers gemäß vorliegender Offenbarung.
Figur 9 zeigt schematisch eine thermische Stratifizierung im Querschnitt ohne Einsatz eines Fluidmischers gemäß vorliegender Offenbarung.
Figur 10 zeigt schematisch eine thermische Vermischung von Fluidströmen an einem Auslass der Mischkammer gemäß vorliegender Offenbarung.
Figur 11 zeigt schematisch eine Brennkammer gemäß vorliegender Offenbarung sowie ein Luftfahrzeug mit solch einer Brennkammer.

Gemäß der vorliegenden Erfindung wird ein Fluidmischer bereitgestellt sowie eine Brennkammer und ein Luftfahrzeug mit einem Fluidmischer beschrieben.

In Figur 1 ist schematisch ein Fluidmischer 100 gemäß dem Stand der Technik perspektivisch dargestellt. Der in der Mischkammer 111 befindliche Mischer 130 bedingt einen Druckverlust aufgrund der Verschwenkung der Strömung innerhalb der Mischkammer 111.

Demgegenüber kann bei einem Fluidmischer 10 gemäß vorliegender Offenbarung, wie er in Figur 2 schematisch und teilweise transparent gezeigt ist, auf ein zusätzliches Bauteil innerhalb der Mischkammer 11 verzichtet werden. Der Fluidmischer 10 weist hierfür eine Vielzahl von Fluidkanälen 20 auf, die jeweils einen Kanalauslass 23, 24 in die Mischkammer 11 haben. Die Mischkammer 11 weist hierbei einen Kammerboden 12 auf, in dem jeder Kanalauslass 23, 24 der Fluidkanäle 20 angeordnet ist. Der Kanalauslass 23, 24 eines Fluidkanals 20 ist an dessen Kanaldecke 26 angeordnet, sodass die Fluidkanälen 20 und die Mischkammer 11 im Wesentlichen nebeneinander angeordnet sind.

Mindestens ein Fluidkanal 22 weist hierbei einen Kanalauslass 24 auf, der sich in Strömungsrichtung des in dem Fluidkanal 22 strömenden Fluids weiter erstreckt als ein Kanalauslass 23 eines der übrigen Fluidkanäle 21. Nur beispielhaft kann jeder zweite Fluidkanal 22 länger sein als die dazwischenliegenden Fluidkanäle 21, wie dies in Figur 2 dargestellt ist.

Der dargestellte Fluidmischer 10 kann entweder in der dargestellten Variante verwendet werden. Alternativ können auch weniger Fluidkanäle 20, beispielsweise nur zwei Fluidkanäle 21, 22 mit den dargestellten unterschiedlichen Kanalauslässen 23, 24 und einer entsprechend schlanken Mischkammer 11 verwendet werden. Die Fluidkanäle 20 und die Mischkammer 11 können auch ringförmig angeordnet sein. Beispielsweise kann die Mischkammer 11 ein Kreisringzylinder sein, wobei Figur 2 lediglich einen Ausschnitt davon darstellt. Die Fluidkanäle 20 sind entsprechend kreisringzylindrisch angeordnet. In einer Ausgestaltungsvariante sind die Fluidkanäle 20 Kühlmittelkanäle einer Brennkammer (nicht dargestellt), die entlang einer Außenseite der Brennkammer verlaufen. Das in den Fluidkanälen 20 strömende Fluid kann dabei die Brennkammeraußenwand kühlen und gleichzeitig der Treibstoff oder eine Treibstoffkomponente für die Brennkammer sein. Selbstverständlich können auch mehrere einzelne des dargestellten Fluidmischers 10 ringförmig um die Brennkammer angeordnet sein.

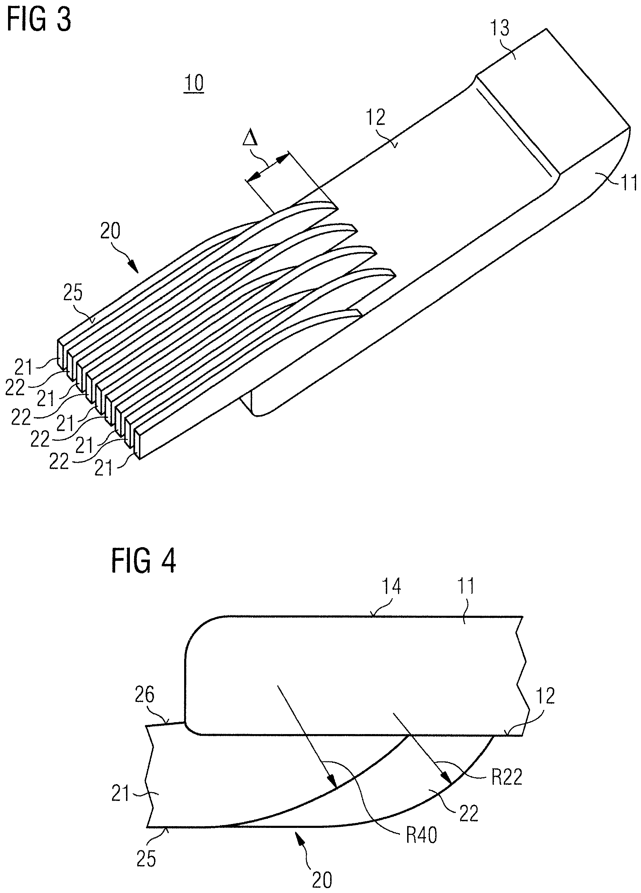

Figur 3 zeigt schematisch eine perspektivische Ansicht des Fluidmischers 10 mit Blick auf den Kammerboden 12 und die Kanalböden 25. Wie deutlich zu erkennen ist, ist der mindestens eine Fluidkanal 22 länger als die übrigen Fluidkanälen 21, sodass zumindest ein Ende des Kanalauslasses 24 des mindestens einen Fluidkanals 22 stromabwärts von einem Ende des Kanalauslasses 23 eines der übrigen Fluidkanälen 21 liegt. Der Abstand Δ in Längsrichtung der Mischkammer 11 bewirkt eine unterschiedliche Strömungsrichtung der durch die jeweiligen Kanalauslässe 23, 24 strömenden Fluidströme in der Mischkammer 11. Dies bewirkt eine Vermischung der Fluidströme, ohne dass ein zusätzliches Bauteil in der Mischkammer 11 notwendig ist.

Dieser Abstand Δ der Kanalauslässe 23, 24 sowie weitere Details sind in dem Beispiel gemäß Figur 4 schematisch dargestellt. So schließen die Fluidkanäle 21, 22 an einem Kammerboden 12 an und bilden dort die Kanalauslässe 23, 24. Die Kanalauslässe 23 der übrigen Fluidkanäle 21 (nachfolgend auch als "kürzere" Kanalauslässe 23 bezeichnet) enden dabei in Strömungsrichtung des Fluids früher als die Kanalauslässe 24 des mindestens eine Fluidkanals 22 (nachfolgend auch als "längerer" Kanalauslass 24 bezeichnet). Der jeweilige Kanalboden 25 der Fluidkanäle 21, 22 verläuft mit unterschiedlichen Krümmungen, hier unterschiedlichen Radien, wobei der Kanalboden 25 zugehörig zu dem längeren Kanalauslass 24 einen kleineren Radius aufweist als der Kanalboden 25 zugehörig zu dem kürzeren Kanalauslass 23. Beispielsweise kann der kleinere Radius in etwa halb so groß sein wie der größere Radius.

In einer beispielhaften Ausgestaltung weisen die Fluidkanäle 21, 22 eine Kanalhöhe von ca. 12 mm und eine Kanalbreite von ca. 1,5 mm auf. Wie in Figur 4 dargestellt, betragen der kleinere Radius 22 mm und der größere Radius 40 mm. Hierbei kann die Mischkammer eine Höhe von ca. 13 mm aufweisen, wobei deren effektive Länge (der Bereich, über den die beiden Fluidströme vermischt werden) ca. 55 mm beträgt.

Die Kanaldecke 26 der übrigen Fluidkanäle 21, und optional auch des mindestens einen Fluidkanals 22, verläuft in der dargestellten Ausgestaltungsvariante in einem Winkel zu dem Kammerboden 12. Dadurch wird eine Fluidströmung in Längsrichtung der Mischkammer 11 erleichtert. Der Einströmwinkel der jeweiligen Fluidströme kann dabei ein stumpfer Winkel sein, um eine Fluidströmung an der Kammerdecke 14 entgegen (in Figur 4 nach links) der eigentlichen Fluidströmung in den Fluidkanälen 20 möglichst gering zu halten.

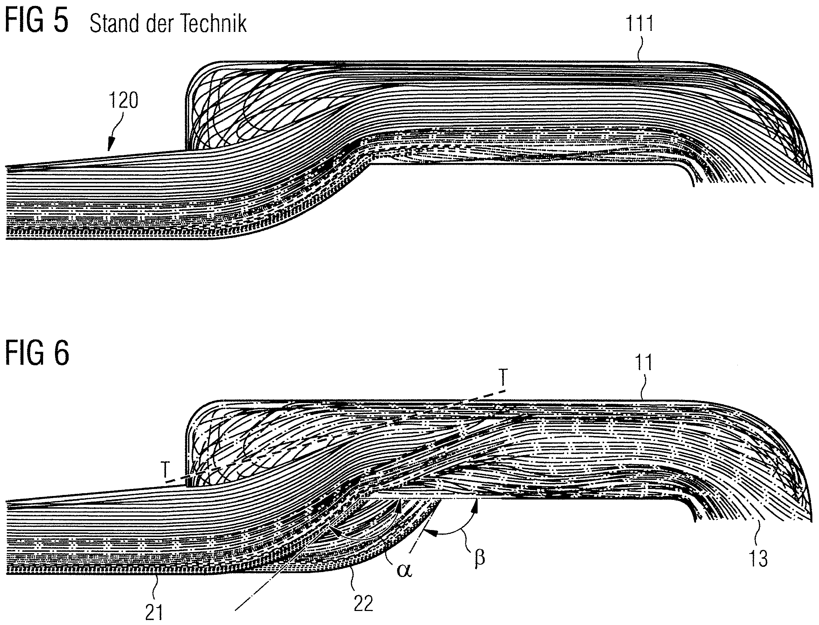

Die durch den Fluidmischer 10 erzielte gute Vermischung der Fluidströme wird anhand der Figuren 5 und 6 näher erläutert. Figur 5 zeigt schematisch eine thermische Stratifizierung in einer Seitenansicht ohne Einsatz eines Fluidmischers gemäß vorliegender Offenbarung. So können die Fluidkanäle 120 als Kühlkanäle dienen, wobei das Fluid auf der in Figur 5 unten dargestellte Seite der Fluidkanäle 120 erwärmt wird. Das erwärmte Fluid mit der höchsten Temperatur (der Bereich des Fluidstroms mit der höchsten Temperatur) wird in Figur 5 mit Linien kurzer Strichelung dargestellt. Das Fluid mit der geringsten Temperatur (Bereich des Fluidstroms mit geringster Temperatur) wird mit durchgezogenen Linien dargestellt. Dazwischenliegende Schichten des Fluids unterschiedlicher Temperatur wird von warm zu kalt mit folgenden Linien dargestellt: längere Strichelung, strichpunktiert mit zwei Punkten und strichpunktiert mit einem Punkt. Es ist deutlich zu erkennen, dass sich die thermische Stratifizierung auch in der Mischkammer 111 weiter fortsetzt.

Demgegenüber zeigt Figur 6 schematisch eine thermische Vermischung von Fluidströmen anhand einer Querschnittsansicht eines Fluidmischers 10 gemäß vorliegender Offenbarung. Auch hier werden die Fluidströme in den Fluidkanälen 21, 22 auf der in Figur 6 unten dargestellten Seite erwärmt, sodass in den Fluidkanälen 21, 22 zunächst eine thermische Stratifizierung vorliegt. Selbstverständlich können auch die einzelnen Fluidkanäle 21, 22 jeweils unterschiedlich temperiertes Fluid führen. In Figur 6 werden die gleichen Kennzeichnungen (Stricharten) von Temperaturen des Fluids wie in Figur 5 verwendet.

Die aus den kürzeren Kanalauslässen 23 der übrigen Fluidkanäle 21 austretenden Fluidströme werden in der Mischkammer 11 bereits axial in Längsrichtung der Mischkammer (links-rechts in Figur 6) ausgerichtet. Dabei ist der stumpfe Winkel α zwischen Fluidkanalboden 25 und Kammerboden 12 hilfreich. Der aus dem mindestens einen längeren Kanalauslass 24 des mindestens einen Fluidkanals 22 austretende Fluidstrom tritt aufgrund der größeren Krümmung des entsprechenden Kanalbodens 25 in einem steileren Winkel in die Mischkammer 11 ein als der dort schon axial ausgerichtete Fluidstrom aus den kürzeren Kanalauslässen 23. Dabei ist der ebenfalls stumpfe Winkel β zwischen Fluidkanalboden 25 und Kammerboden 12 hilfreich, der optional aber kleiner ist als der Winkel α zwischen Fluidkanalboden 25 und Kammerboden 12 der übrigen Fluidkanäle 21.

Ferner ist in Figur 6 dargestellt, dass in einem Totraum der Mischkammer 11 (oberhalb der Linie T-T) im Vergleich zum Stand der Technik (siehe Figur 5) deutlich geringere Verwirbelungen stattfinden. Daher könnte die Mischkammer 11 auch eine Kammerdecke 14 aufweisen, die in dem Bereich des Totraums schräg verläuft. Beispielsweise kann die Kammerdecke 14 in dem Bereich der Kanalauslässe 23, 24 schräg oder gekrümmt verlaufen. In einer weiteren beispielhaften Ausgestaltung kann die Kammerdecke 14 bündig mit der jeweiligen Kanaldecke 26 der Fluidkanäle verlaufen.

Die in der Mischkammer 11 nebeneinander eintretenden Fluidströme aus den Kanalauslässen 23, 24 verlaufen zunächst schräg zueinander. Insbesondere der/die aus dem/n längeren Kanalauslass/auslässen 24 austretende/n Fluidstrom erzeugt/en eine Scherströmung gegenüber den bereits axial ausgerichteten Fluidströmen aus den übrigen Fluidkanälen 21. Dadurch werden im weiteren Verlauf der Mischkammer 11 (stromabwärts) Längswirbel erzeugt.

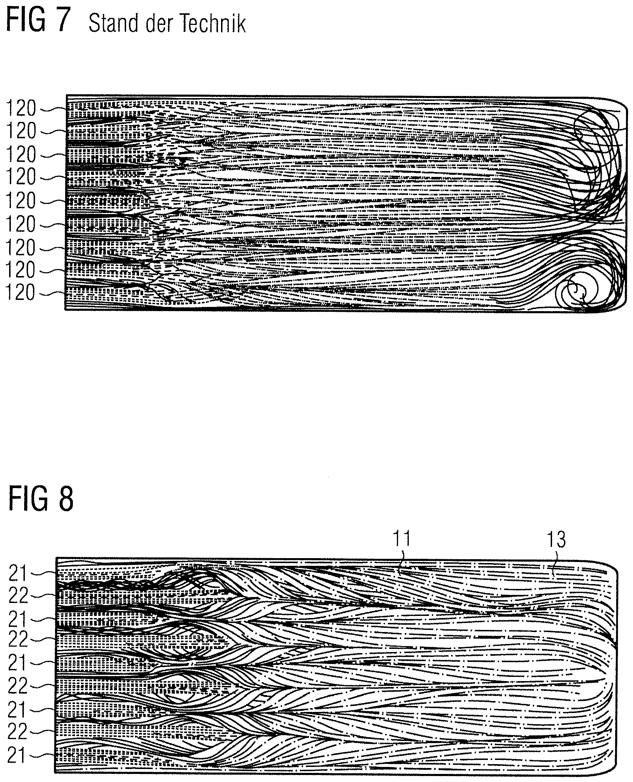

Diese Längswirbel werden anhand der Figuren 7 und 8 verdeutlicht. Auch hier werden wieder die gleichen Kennzeichnungen (Stricharten) von Temperaturen des Fluids wie in Figur 5 verwendet. Figur 7 zeigt schematisch eine thermische Stratifizierung in einer Bodenansicht ohne Einsatz eines Fluidmischers gemäß vorliegender Offenbarung. Ohne den Fluidmischer 10 gemäß vorliegender Offenbarung herrscht insbesondere am Kammerboden eine nahezu gleichmäßige lineare Strömung vor, sodass die thermische Stratifizierung auch in der Mischkammer fortgesetzt ist.

Figur 8 zeigt schematisch eine Bodenansicht des Fluidmischers 10 gemäß vorliegender Offenbarung, wobei der Kammerboden entfernt ist. An dem Kammerboden 12 des Fluidmischers 10 verlaufen die Längswirbel, die in dem Bereich der Kanalauslässe 23, 24 und ein kurzes Stück stromabwärts der längeren Kanalauslässe 24 erzeugt werden. Dadurch wird die thermische Stratifizierung beseitigt, wodurch die Fluidströme der Fluidkanäle 21, 22 in Längsrichtung der Mischkammer 11 über den gesamten Querschnitt (senkrecht zur Längsrichtung) der Mischkammer 11 vermischt werden.

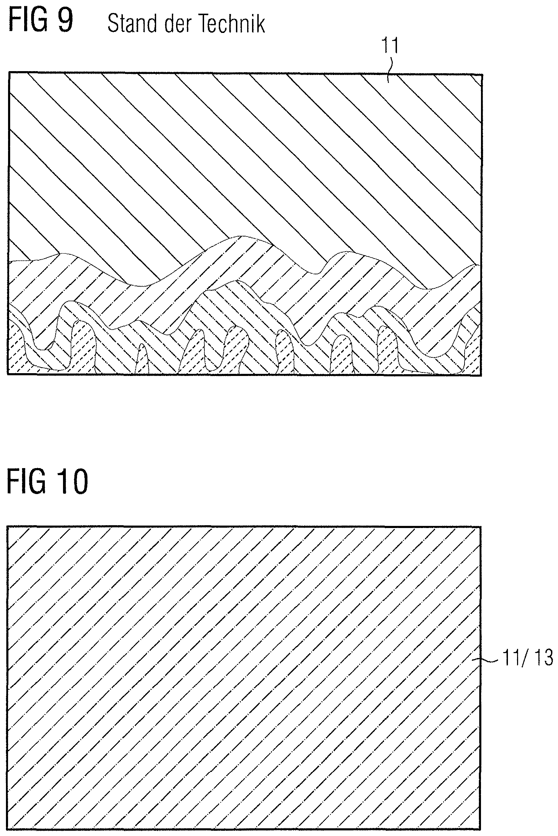

An einem Mischkammerausgang 13 (siehe auch Figur 3) kann dadurch ein gleichmäßig temperierter Fluidstrom erzeugt werden. Dies ist im Vergleich der Figuren 9 und 10 deutlich zu erkennen. Auch in dieser Darstellung werden wieder die gleichen Kennzeichnungen (Stricharten) von Temperaturen des Fluidstroms wie in Figur 5 verwendet.

Dabei zeigt Figur 9 schematisch eine thermische Stratifizierung im Querschnitt ohne Einsatz eines Fluidmischers gemäß vorliegender Offenbarung. Deutlich zu erkennen ist die weiterhin vorherrschende thermische Stratifizierung. In Figur 10 ist schematisch eine thermische Vermischung von Fluidströmen an einem Auslass 13 der Mischkammer 11 gemäß vorliegender Offenbarung gezeigt.

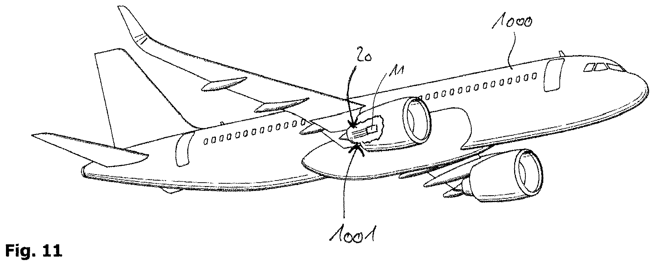

In Figur 11 ist schließlich schematisch eine Brennkammer 1001 gemäß vorliegender Offenbarung sowie ein Luftfahrzeug 1000 mit solch einer Brennkammer gezeigt. Beispielsweise kann es sich um eine Brennkammer 1001 eines Düsentriebwerks eines Flugzeugs handeln. Dabei kann Fluid in den Fluidkanälen 20 eine Außenseite der Brennkammer 1001 kühlen und in der Mischkammer 11 vermischt werden, bevor das Fluid in die Brennkammer geleitet wird.

Alternativ kann es sich auch um ein Raketentriebwerk einer Rakete mit entsprechender Brennkammer 1001 handeln.

Abschließend sei insbesondere darauf hingewiesen, dass die voranstehend erörterten Varianten, Ausgestaltungen und Ausführungsbeispiele lediglich zur Beschreibung der beanspruchten Lehre dienen, diese jedoch nicht auf die Varianten, Ausgestaltungen und Ausführungsbeispiele einschränken.

## Patentansprüche

1. Fluidmischer (10) mit:
- einer Vielzahl von Fluidkanälen (21, 22), die jeweils einen Kanalboden (25) und eine Kanaldecke (26) aufweisen, wobei jeder Fluidkanal (21, 22) einen Kanalauslass (23, 24) an seiner Kanaldecke (26) aufweist, und wobei die Fluidkanäle (21, 22) in Strömungsrichtung eines in dem Fluidkanal (22) strömenden Fluides nebeneinander angeordnet sind; und
- einer Mischkammer (11), die einen Kammerboden (12) aufweist, in dem jeder Kanalauslass (23, 24) der Vielzahl von Fluidkanälen (21, 22) angeordnet ist,
wobei mindestens ein Fluidkanal (22) der Vielzahl von Fluidkanälen (21, 22) einen Kanalauslass (24) aufweist, der sich in der Strömungsrichtung des in dem Fluidkanal (22) strömenden Fluides weiter erstreckt als ein benachbarter Kanalauslass (23) eines der übrigen Fluidkanäle (21).

2. Fluidmischer (10) gemäß Anspruch 1, wobei der mindestens eine Fluidkanal (22) mehrere Fluidkanäle (22) umfasst, und sich mindestens ein Fluidkanal der übrigen Fluidkanäle (21) zwischen zwei der mehreren Fluidkanäle (22) befindet.

3. Fluidmischer (10) gemäß Anspruch 1 oder 2, wobei jeder Fluidkanal (21, 22) einen rechteckigen oder trapezförmigen Querschnitt aufweist und/oder wobei die Mischkammer (11) einen rechteckigen, trapezförmigen oder runden Querschnitt aufweist.

4. Fluidmischer (10) gemäß einem der Ansprüche 1 bis 3, wobei der mindestens eine Fluidkanal (22) zumindest in einem Abschnitt des Kanalauslasses (24) einen gekrümmten Kanalboden (25) aufweist.

5. Fluidmischer (10) gemäß Anspruch 4, wobei der gekrümmte Kanalboden (25) an dem Kanalauslass (24) mit dem Kammerboden (12) einen stumpfen Winkel bildet.

6. Fluidmischer (10) gemäß Anspruch 4 oder 5, wobei die übrigen Fluidkanäle (21) zumindest in einem Abschnitt des jeweiligen Kanalauslasses (23) der übrigen Fluidkanäle (21) einen gekrümmten Kanalboden (25) aufweisen.

7. Fluidmischer (10) gemäß Anspruch 6, wobei sich eine Krümmung des gekrümmten Kanalbodens (25) des mindestens einen Fluidkanals (22) von einer Krümmung des gekrümmten Kanalbodens (25) der übrigen Fluidkanäle (21) unterscheidet.

8. Fluidmischer (10) gemäß einem der Ansprüche 1 bis 7, wobei der Kammerboden (12) im Wesentlichen parallel zu der Kanaldecke (26) der Vielzahl von Fluidkanälen (21, 22) verläuft, oder
wobei der Kammerboden (12) mit der Kanaldecke (26) der Vielzahl von Fluidkanälen (21, 22) einen stumpfen Winkel bildet.

9. Fluidmischer (10) gemäß einem der Ansprüche 1 bis 8, wobei die Mischkammer (11) einen Bereich stromabwärts des aus dem Fluidkanal (22) in die Mischkammer (11) strömenden Fluides aufweist, der einen gleichbleibenden Querschnitt aufweist.

10. Fluidmischer (10) gemäß einem der Ansprüche 1 bis 9, wobei eine Querschnittsachse eines Fluidkanals (21) einen gemeinsamen Schnittpunkt mit einer Querschnittsachse mindestens eines benachbarten Fluidkanals (22) aufweist.

11. Brennkammer (1001) mit einem Fluidmischer (10) gemäß einem der Ansprüche 1 bis 10.

12. Brennkammer (1001) gemäß Anspruch 11, wobei die Brennkammer (1001) Teil eines Raketentriebwerks für eine Rakete, einer Steuerdüse für einen Satelliten oder eines Düsentriebwerks für ein Flugzeug (1000) ist.

13. Luftfahrzeug (1000) mit einem Fluidmischer (10) gemäß einem der Ansprüche 1 bis 10.

14. Luftfahrzeug (1000) gemäß Anspruch 13, wobei der Fluidmischer (10) Treibstoff für eine Brennkammer (1001) für ein Triebwerk des Luftfahrzeugs (1000) mischt, oder warme und kalte Luft zur Zuführung in einen Bereich des Luftfahrzeugs (1000) mischt.

## Claims

1. A fluid mixer (10) comprising:
- a plurality of fluid channels (21, 22) each having a channel bottom (25) and a channel ceiling (26), wherein each fluid channel (21, 22) has a channel outlet (23, 24) at its channel ceiling (26), and wherein the fluid channels (21, 22) are arranged side by side in the flow direction of a fluid flowing in the fluid channel (22); and
- a mixing chamber (11) having a chamber floor (12) in which each channel outlet (23, 24) of the plurality of fluid channels (21, 22) is located,
wherein at least one fluid channel (22) of the plurality of fluid channels (21, 22) has a channel outlet (24) which extends further in the flow direction of the fluid flowing in the fluid channel (22) than an adjacent channel outlet (23) of one of the remaining fluid channels (21).

2. The fluid mixer (10) according to claim 1, wherein the at least one fluid channel (22) comprises a plurality of fluid channels (22), and at least one fluid channel of the remaining fluid channels (21) is located between two of the plurality of fluid channels (22).

3. The fluid mixer (10) according to claim 1 or 2, wherein each fluid channel (21, 22) has a rectangular or trapezoidal cross-section and/or wherein the mixing chamber (11) has a rectangular, trapezoidal or round cross-section.

4. The fluid mixer (10) according to one of claims 1 to 3, wherein the at least one fluid channel (22) has a curved channel bottom (25) at least in a portion of the channel outlet (24).

5. The fluid mixer (10) according to claim 4, wherein the curved channel bottom (25) at the channel outlet (24) forms an obtuse angle with the chamber bottom (12).

6. The fluid mixer (10) according to claim 4 or 5, wherein the remaining fluid channels (21) have a curved channel bottom (25) at least in a portion of the respective channel outlet (23) of the remaining fluid channels (21).

7. The fluid mixer (10) according to claim 6, wherein a curvature of the curved channel bottom (25) of the at least one fluid channel (22) differs from a curvature of the curved channel bottom (25) of the remaining fluid channels (21).

8. The fluid mixer (10) according to one of claims 1 to 7, wherein the chamber bottom (12) extends substantially parallel to the channel ceiling (26) of the plurality of fluid channels (21, 22), or
wherein the chamber bottom (12) forms an obtuse angle with the channel ceiling (26) of the plurality of fluid channels (21, 22).

9. The fluid mixer (10) according to one of claims 1 to 8, wherein the mixing chamber (11) has a region downstream of the fluid flowing from the fluid channel (22) into the mixing chamber (11) which has a constant cross-section.

10. The fluid mixer (10) according to one of claims 1 to 9, wherein a cross-sectional axis of a fluid channel (21) has a common intersection point with a cross-sectional axis of at least one adjacent fluid channel (22).

11. A combustion chamber (1001) having a fluid mixer (10) according to one of claims 1 to 10.

12. The combustion chamber (1001) according to claim 11, wherein the combustion chamber (1001) is part of a rocket engine for a rocket, a control nozzle for a satellite or a jet engine for an aircraft (1000).

13. An aircraft (1000) having a fluid mixer (10) according to of claims 1 to 10.

14. The aircraft (1000) according to claim 13, wherein the fluid mixer (10) mixes fuel for a combustion chamber (1001) for an engine of the aircraft (1000), or mixes hot and cold air for supply to a region of the aircraft (1000).

## Revendications

1. Mélangeur de fluide (10) comprenant :
- une pluralité de canaux de fluide (21, 22) qui présentent chacun un fond de canal (25) et un plafond de canal (26), chaque canal de fluide (21, 22) comprenant une sortie de canal (23, 24) à son plafond de canal (26), et les canaux de fluide (21, 22) étant disposés côte à côte dans le sens d'écoulement d'un fluide s'écoulant dans le canal de fluide (22) ; et
- une chambre de mélange (11) qui présente un fond de chambre (12) dans lequel est disposée chaque sortie de canal (23, 24) de la pluralité de canaux de fluide (21, 22),
dans lequel au moins un canal de fluide (22) de la pluralité de canaux de fluide (21, 22) comprend une sortie de canal (24) s'étendant plus loin dans le sens d'écoulement du fluide s'écoulant dans le canal de fluide (22) qu'une sortie de canal adjacente (23) de l'un des autres canaux de fluide (21).

2. Mélangeur de fluide (10) selon la revendication 1, dans lequel ledit au moins un canal de fluide (22) comprend plusieurs canaux de fluide (22), et au moins un canal de fluide des autres canaux de fluide (21) se trouve entre deux desdits plusieurs canaux de fluide (22).

3. Mélangeur de fluide (10) selon la revendication 1 ou 2, dans lequel chaque canal de fluide (21, 22) comprend une section transversale rectangulaire ou trapézoïdale et/ou dans lequel la chambre de mélange (11) comprend une section transversale rectangulaire, trapézoïdale ou ronde.

4. Mélangeur de fluide (10) selon l'une des revendications 1 à 3, dans lequel ledit au moins un canal de fluide (22) comprend un fond de canal incurvé (25) au moins dans une partie de la sortie de canal (24).

5. Mélangeur de fluide (10) selon la revendication 4, dans lequel le fond de canal incurvé (25) forme un angle obtus avec le fond de chambre (12) à la sortie de canal (24).

6. Mélangeur de fluide (10) selon la revendication 4 ou 5, dans lequel les autres canaux de fluide (21) comprennent un fond de canal incurvé (25) au moins dans une partie de la sortie de canal respective (23) des autres canaux de fluide (21).

7. Mélangeur de fluide (10) selon la revendication 6, dans lequel une courbure du fond de canal incurvé (25) dudit au moins un canal de fluide (22) diffère d'une courbure du fond de canal incurvé (25) des autres canaux de fluide (21).

8. Mélangeur de fluide (10) selon l'une des revendications 1 à 7, dans lequel le fond de chambre (12) s'étend sensiblement parallèlement au plafond de canal (26) de la pluralité de canaux de fluides (21, 22), ou
dans lequel le fond de chambre (12) forme un angle obtus avec le plafond de canal (26) de la pluralité de canaux de fluides (21, 22).

9. Mélangeur de fluide (10) selon l'une des revendications 1 à 8, dans lequel la chambre de mélange (11) comprend, en aval du fluide s'écoulant du canal de fluide (22) dans la chambre de mélange (11), une zone ayant une section transversale constante.

10. Mélangeur de fluide (10) selon l'une des revendications 1 à 9, dans lequel un axe de section transversale d'un canal de fluide (21) comprend une intersection commune avec un axe de section transversale d'au moins un canal de fluide adjacent (22).

11. Chambre de combustion (1001) dotée d'un mélangeur de fluide (10) selon l'une des revendications 1 à 10.

12. Chambre de combustion (1001) selon la revendication 11, dans laquelle la chambre de combustion (1001) fait partie d'un moteur-fusée pour une fusée, d'une tuyère de commande pour un satellite ou d'un moteur à réaction pour un aéronef (1000).

13. Aéronef (1000) équipé d'un mélangeur de fluide (10) selon l'une des revendications 1 à 10.

14. Aéronef (1000) selon la revendication 13, dans lequel le mélangeur de fluide (10) mélange du combustible pour une chambre de combustion (1001) pour un moteur de l'aéronef (1000) ou mélange de l'air chaud et froid à amener dans une zone de l'aéronef (1000).
